# EUROPEAN PATENT APPLICATION

(11) **EP 4 716 033 A1**
(43) Date of publication of application: **25.03.2026**
(21) Application number: 24202379.4
(22) Date of filing: 24.09.2024
(51) Int. Cl.: H01R 43/28, H01R 43/26, B60R 16/02, H01B 13/012

(54) **SUPPORT DEVICE FOR THE TRANSPORT OF AN ASSEMBLY OF WIRE HARNESS ELEMENTS DURING MANUFACTURE**

(71) Applicant: Aptiv Technologies AG, 8200 Schaffhausen (CH)
(72) Inventor: FERREIRA, Joao Ricardo, 8200 Schaffhausen (CH); MATIAS, Pedro, 8200 Schaffhausen (CH); ANTUNES RIBEIRO, Nico Nuno Tiago, 8200 Schaffhausen (CH); FERREIRA DA SILVA, Marco Ruben Medeiros, 8200 Schaffhausen (CH)
(74) Representative: INNOV-GROUP

(57) **Abstract**

A support device (700) supports an assembly of wire harness elements during the manufacture a wire harness, for transport of the assembly from a wire segment plugging area to a splicing area. The device has a frame-like structure with outer frame segments (710,720,730,740) and one central open window (750) formed therebetween. Some of the outer frame segments have fixtures for securing the support device to an underlying support pallet (400) adapted to support connectors (250) in which wire segments (300) can be plugged at the wire plugging area (810). Connectors (250) plugged into the pallet emerge through the open window (750) of the support device (700) when the support device (700) is secured to said support pallet (400) through said fixings (760). One of the outer frame segments comprises bearing elements for bearing sets of wires after they have been processed in the splicing or welding area (610).

## Description

### BACKGROUND

### Technical Field

The present disclosure relates generally to the field of electric wires processing and assembly, and in particular to automated wire stripping and splicing or welding. This is of interest and finds applications, for example, in the industrial production of cable harnesses for the automotive industry in particular, for example, for the electrical distribution system of vehicles.

More specifically, the invention relates to a support device designed to carry an assembly of wire harness elements during certain stages of its manufacture. In particular, the support device can be used to transport, i.e., to carry such an assembly for automated and/or manual displacement from a wire segment plugging machine, in which the wire segments are plugged into wire holders which comprise wire connectors of the wire harness being manufactured, to a splicing or welding area. There, at least some of the wire segments can be extracted automatically, i.e. independently of any operator, from the holders and presented to a splicing or welding machine for processing.

### Related Art

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Reference DE102017206139 discloses an installation and a method for the automated production of a cable set which has a branched structure and a plurality of individual line elements. In a modular set-up, the installation has two parts. A plurality of first processing stations are arranged in the first part, and a plurality of second processing stations are arranged in the second part. In the first part there is, *inter alia,* a cutting station for cutting the line elements to length from a reel and a stripping station for stripping the line ends of the line elements, arranged to operate automatic preparation of the individual line elements, which are then collected in a buffer station at the end of said first part. In the second part, the prepared individual line elements are assembled into the cable set. For that purpose, the line elements are plugged into connector casings in a connector station and transferred to second transporters. The branched structure of the cable set is then formed by displacement along second rails by means of said second transporters. In this spread-apart branched structure, *inter alia,* the line elements are fixed to one another in a fixing station. Further, a distribution station is arranged following the connector station and upstream of the fixing station for distributing the second transporters with the line elements held thereon into a predetermined distribution structure according to the branched structure of the cable set. The connector casings are moved by means of the second transporters to their end positions in accordance with the branched structure of the cable set, so that the cable set is spread out in a two-dimensional plane. The installation thus disclosed is very complex.

There is a need for an alternative solution for overcoming one or more drawbacks of the prior art and/or improving the current fabrication of wire harnesses at an industrial scale, with regards to, in particular:
- the convenience of being able to bring wires from a manual or an auto-plugging machine to an automatic splicing machine without loosing position of the wire harness elements, so as to allow further automatization of the fabrication line by making the splicing or welding process automatic, i.e. operator independent, through the use of a robotic splicing or welding workstation;
- the convenience of having splices separately positioned and securely hold in position instead of being dropped in a basket and/or left hanging erratically in the air, after their making by the splicing or welding machine at the splicing or welding workstation; and/or,
- the problem of being able to automatically strip and splice or weld wires of different cross-sections, for example from 0,13 mm² to 2,5 mm², and being able to process the wires to make both butt splices and dual-end splices when required for making any desired wire harness.

### SUMMARY

Embodiments of the invention address some or all of the needs identified above arising from the state of the art.

In particular, there is proposed a support device according to independent claim 1, for supporting an assembly of elements of a wiring harness during its manufacture, in particular for the transport of said assembly from a wire segment plugging area, where the plugging of wire segments can be performed into wire holders which comprise wire connectors of the wiring harness being manufactured, to a splicing or welding area where at least some of the wire segments can be presented to a splicing or welding machine for processing.

According to embodiments of the invention:
- the support device has a frame-like structure with outer frame segments and at least one central open window formed therebetween,
- at least some of the outer frame segments of the support device have fixtures for securing the support device to an underlying support pallet adapted to support connectors in which wire segments can be plugged at the wire plugging area, the plane of the support device extending parallel to the plane of the pallet and the connectors having the possibility of emerging through the open window of the support device when the support device is secured to said support pallet through said fixings,
- at least one of the outer frame segments of the support device comprises bearing elements for bearing at least one set of wires after it has been processed in the splicing or welding area.

This allows a single robotic gripper to be used to extract the wires from the wire holder acting as a stripping tool to strip the end portion of all the electrical wires at once, and to bring the stripped wires to the splicing or welding machine without releasing them, so that the longitudinal alignment and parallel extension of the wires is not lost during this transport.

Further advantageous embodiments of the proposed support device are defined in the dependent claims.

A second aspect of the proposed solution relates to an automatic splicing or welding installation.

Finally, a third aspect relates to a method of transporting wire harness elements along an industrial assembly line, from a wire segment plugging area where the plugging of wire segments can be performed into wire holders which include wire connectors of the wire harness being manufactured, to a splicing or welding area where wire segments can be presented to a splicing or welding machine for processing, said method comprising using a support device according to the first aspect as carrier for the wire harness elements.

### BRIEF DESCRIPTION OF THE DRAWINGS

Embodiments of the present invention are illustrated by way of example, and not by way of limitation, in the figures of the accompanying drawings, in which:
- **Figure 1** is a simplified schematic view of part of an industrial automated system which shows an auto-plugging machine and a separate automated splicing or welding installation (or automatic workstation) according to embodiments.
- **Figure 2** is a schematic view illustrating a wire holder in a context of use within an embodiment of the automated system of Figure 1, with electric wires to be processed plugged into it.
- **Figure 3** is an isometric perspective view illustrating details of a non-restrictive embodiment of the wire holder schematically shown in Figure 2.
- **Figure 4A** and **Figure 4B** are schematic views showing a pre-stripped electrical insulated wire and illustrating the step of stripping the end portion of the insulating sheath of said pre-stripped wire, respectively.
- **Figure 5** is an isometric perspective views of a robot arm equipped with a wire gripper having a comb-like clamping wall structure adapted to rake and grip wire segments at the splicing or welding installation according to embodiments.
- **Figure 6** is an isometric perspective view of an ultrasonic splicing or welding machine which can be comprised in the splicing or welding installation according to embodiments.
- **Figure 7A** and **Figure 7A** are perspective views of some wire harness elements, namely butt splices and dual-end splices which can be processed at the splicing or welding installation according to embodiments and can be supported, after having been so processed, by the proposed support device.
- **Figure 8** is an isometric perspective view showing a pallet with wire harness connectors plugged therein, as used in known au-plugging machines, with which the proposed support device is adapted to cooperate.
- **Figure 9** is an exploded isometric perspective view of an embodiment of the proposed support device.
- **Figure 10A** and **Figure 10A** are an isometric perspective view and a front view, respectively, of the proposed support device according to the embodiment as shown in Figure 9.
- **Figure 11** is an isometric perspective view of a *wire hanger bar with M-shaped clamping buckles* for holding butt splices and/or dual-end splices after their process at the automatic splicing or welding installation according to embodiments.
- **Figure 12** is an isometric perspective view of another embodiment of the proposed support device.
- **Figure 13** is an isometric perspective view of still another embodiment of the proposed support device.
- **Figure 14** is a simplified schematic view of an automatic splicing or welding installation according to embodiments.
- **Figure 15A** and **Figure 15B** are schematic views showing alternative positioning of the splicing or welding machine with respect to the proposed support device at an automatic splicing or welding installation according to embodiments

### DESCRIPTION OF PREFERRED EMBODIMENTS

The present disclosure relates to a support device for supporting an assembly of wire harness elements during the manufacture of the wire harness which include same. This support device can be used, in particular, for the transport of such assembly from a wire segment plugging machine, which carries out the plugging of wire segments into wire holders, to a splicing or welding area of the wire harness assembly line. These wire holders include the wire connectors of the wire harness being manufactured, as well as one or more dummy connectors holding wires to stripped and then spliced (see below). At the splicing or welding area, wire segments and in particular sets of wire segments respectively plugged in the dummy connectors can be commonly manipulated by a robotic arm, to be presented to a splicing or welding machine for processing by said machine. After this processing, the butt splices or dual-end splices obtained from the sets of wires can be deposited and secured by the robotic arm in a given position within dedicated support elements of the support device.

Embodiments of the proposed support device will now be described with reference to the accompanying drawings. A method for automatic splicing or welding of electric wire segments using said support device will also be disclosed.

The drawings and the following description illustrate specific exemplary embodiments of the proposed solution. It will thus be appreciated that those skilled in the art will be able to devise various arrangements that, although not explicitly described or shown herein, embody the principles of the solution and are included within the scope of the claims. Furthermore, any examples described herein are intended to aid in understanding the principles of the proposed solution, and are to be construed as being without limitation to such specifically recited examples and conditions. As a result, the invention is not limited to the specific embodiments or examples described below, but by the claims and their equivalents.

In the figures of the drawings, like reference numerals refer to similar elements. In addition, unless specifically indicated to the contrary, the disclosures contained in the entire description can be applied analogously to the same parts with the same reference signs or the same component identifiers.

In the following description, well-known functions or constructions by the person skilled in the art are not described in detail since they would obscure the invention in unnecessary detail.

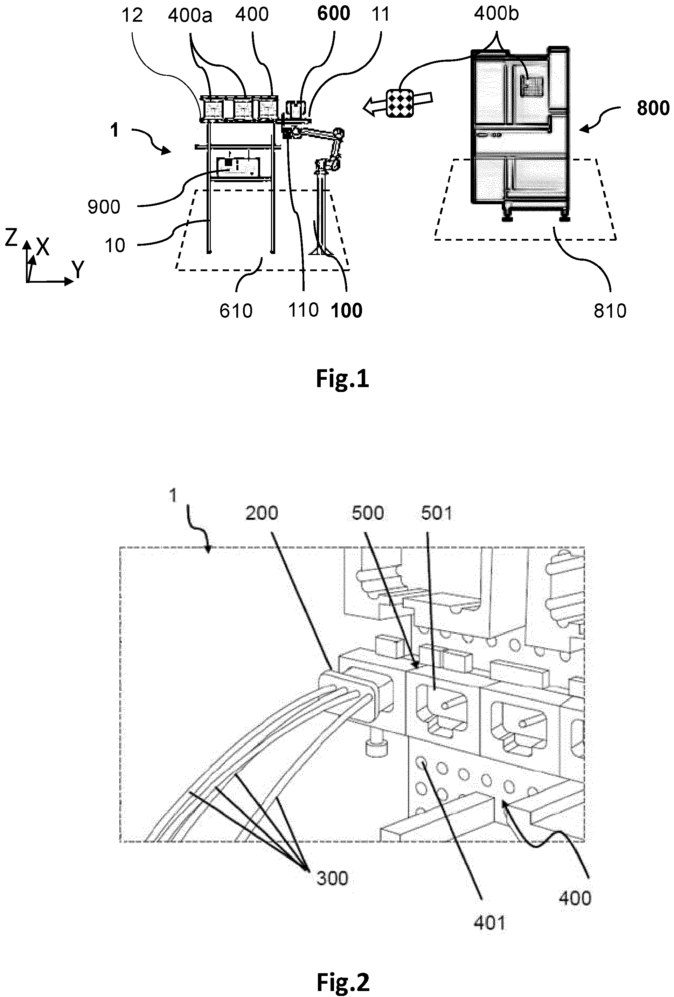

**Figure 1** schematically shows an automated industrial system wherein embodiments of the configurable robotic workstation 1 can be implemented.

The system comprises an automatic plugging machine 800, also referred to as an auto-plugging machine, which is adapted to carry-out automatic insertion of a set of electrical wire segments into one or more wire holders. These wire holders include the connectors of a wire harness under fabrication, as part of the wire harness manufacturing process, as well as so-called "dummy connectors" also referred to as stripping tools because they are involved in the process of stripping wires to be spliced or welded. According to embodiments of the present invention, the auto-plugging machine is adapted and used to automatically insert wire segments in the wire holders. The wire segments of said set of wire segments can have different cross-sections, even when they are intended for being used to manufacture a single harness or part of a harness.

In the shown example, the automatic plugging machine 800 is located in a plugging area 810 of a wire harness assembly line. For example, the auto-plugging machine 800 can incorporate one or more operational modules from the Omega suite of process modules for feeding, pre-processing and buffering wires for the cable harnesses to be manufactured, which are available from Komax AG, a Swiss company.

The robotic workstation 1 comprises a splicing or welding machine 600, and is located in a splicing or welding area 610, downstream of the plugging area 810 within the line of production. For example, the splicing or welding machine 600 can be a Minic-III^{™} wire welding machine or any other operational module from the Sonosystems^{®} suite, which are available from the German company Schunk Sonosystems GmbH.

For example, the robotic workstation 1 comprises a base frame (chassis) 10 with at least one table 11 on which the wire bonding machine 600 can be placed. The workstation 1 further comprise a conveyor 12 adapted to support and to let circulate pallets 400, 400a and 400b in the splicing or welding area 610, which are received from the auto-plugging area 810. In the shown example, pallet 400 is a pallet in position for processing at the splicing or welding area 610. Pallets 400a have are pallets the processing of which has been completed at the workstation 1, and which are waiting for being taken from the splicing or welding area 610. Finally, pallets 400b are pallets still upstream of the splicing or welding area 610, one being still used in the auto-plugging area 810, and the other being loaded with crimped connectors holding wires, and the process of being being transported from the auto-plugging area 810 to the splicing or welding area 610.

The robotic workstation 1 may further have a general unit 900, which is place for instance on another table of the chassis 10. The general unit 900 has a control unit, a processing unit, and/or a positioning unit for positioning the robotic arm 100, and/or the mobile gripper of said robotic arm. The general unit 900 can be configured to command the gripper 110 of the robot arm 100, the robotic arm 100 itself, the welding machine 600, and any other listed or non-listed components of the workstation 1. The general unit 900 may comprise a general electric power supply connection and/or a compressed air supply connection. The general unit 900 of the robotic workstation 1 of Figure 1 can further comprise a mapping unit for storing or receiving the position of the masks 700, as well as various detectors for tracking position of mobile component of the workstation, and/or for detecting position of wire harness elements of the wire harness(es) being fabricated.

According to embodiments, the operation of stripping wire segments before splicing or welding is carried out at level of the welding workstation which includes the splicing or welding machine 600. More particularly, stripping of each wire segments is performed by pulling the wire segments out of the wire holder, namely the "dummy connector" or stripping tool, in which it has been plugged by the auto-plugging machine 800, whereby a pre-stripped sheath end of the wire segment is removed from the rest of said wire segment.

Therefore, the set of wire segments to be spliced or welded by the splicing or welding machine 600 are received by the robotic workstation 1 from the automatic plugging machine 800, plugged into one or more of the above-mentioned "dummy connectors" or stripping tools. Stated otherwise, these wire holders with wire segments plugged therein must be transferred from the automatic plugging machine 800 at area 810 to the splicing or welding area 610, to be presented to the splicing or welding machine 600. The problem of carrying out this operation automatically is at the heart of the proposed solution as will become apparent from the below description of embodiments.

The operation of cutting wire segments to length from a plurality of reels, each storing continuous wires of given cross-sections, can be carried out on or at level of the automatic plugging machine 800, or upstream of said machine in the wire harness assembly line. This operation can be carried out automatically, using robotic tools commonly available on the market. It may also be carried out manually, by an operator. A description of this operation would be beyond the scope of the present description and will therefore not be developed here.

It will be noted that, whereas auto-plugging machine 800 for automatic insertion of electrical wires into the wire holders is presented here, embodiments of the present invention are not limited to this example. Indeed, the plugging of the wires into the wire holders can be performed manually by an operator. The invention fully accommodates with such manual plugging of the wires. What matters is that electric wire segments to be stripped and then to be spliced or welded, are received by the automated system 1 plugged into wire holders wherein they are aligned longitudinally, and placed in a row, in parallel, along a transverse direction (the term "transverse" being considered in relation to the longitudinal direction of extension of the wire segments).

**Figure 2** schematically illustrates a wire holder or "dummy connector" 200 in a context of use within the automated system of Figure 1, with electric wires 300 to be processed (namely to be stripped, and then to be spliced or welded) which are plugged into it. More specifically, Figure 2 illustrates a context of use of "dummy connectors" as stripping tools, wherein the proposed support device is not used.

Basically, such a wire holder 200 can be used to group together individual wire segments to form a set (or bundle) of wires for the manufacture of a given wire harness, or of a portion thereof. According to the embodiments described herein, the wire holder 200 further constitutes a pre-stripping and stripping tool, as well as a carrier for transporting the wire set from the plugging area 810 to the splicing or welding area 610, as will become clear in the following.

The stripping tool 200 is arranged to receive the electric wire segments 300 placed therein either manually by an operator or automatically by a robotic tool, as already mentioned above. The stripping tool 200 is removably placed on a rack 500, in a receiving rack portion 501 of said rack 500. The receiving rack portion 501 is typically called a connector holder.

In some embodiments, the rack 500 is placed on a pallet 400, and can be fixed to it by fixing means (*e*.*g*. fixing screw(s) screwed in fixing hole(s) 401 of the pallet 400 as shown. At the plugging area 801, the operator or the robotic plugging machine may take the electric wire segments 300, cut to length, for instance from a cutting machine or from a storage portion which can be positioned on the rack 500 itself, or in another receiving rack portion (not shown). Pallets 400b with one or more stripping tool 200 each holding a set of pre-stripped wire segments, can be transferred from the plugging area 810 to the splicing or welding area 610, downstream in the wire harness assembly line, either manually by an operator or by a conveyor of any appropriate type and configuration, as schematically illustrated by the thick white arrow in Figure 1. At the splicing or welding area 610, the stripping tools 200 are received in respective rack portions 501 of the rack 500 on a pallet 400, and sets of wire segments are pulled out from respective stripping tools 200, causing the end portion of the sheath to separate from the pre-stripped wires and hence the wire segments to be stripped.

With further reference again to Figure 1, indeed, the automated system 1 has a movable robot arm 100, which is able to grab a set of electric wire segments 300 from a wire holder 200 as shown in Figure 2, through a wire gripper 110 mounted on said robot arm 100. The wire gripper 110 can be pneumatically and/or electrically actuated.

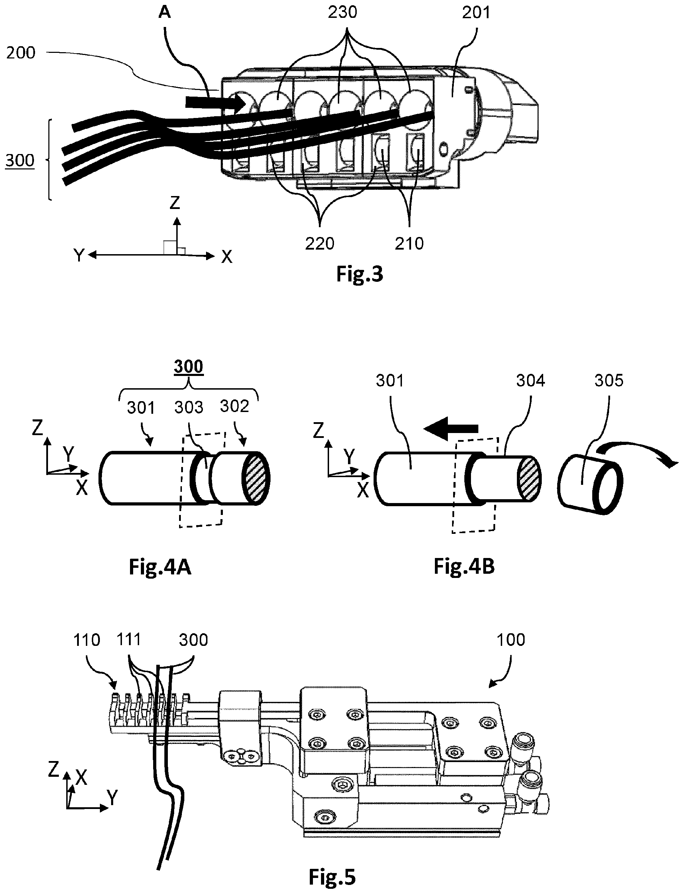

**Figure 3** illustrates, in an isometric perspective view, details of a possible, nonrestrictive embodiment of the stripping tool or wire holder 200 (or dummy connector) schematically shown in Figure 2.

Advantageously, the wire holder 200 (or dummy connector) as shown comprises several receiving parts, preferably two or more, preferably six or more. In this way, a plurality of electrical wire segments to be spliced or welded can be placed and received in a given positioning configuration. This improves productivity, particularly with regard to the problem of aligning, storing and gripping individual wire segments until they are spliced or welded together to form the intended harness element.

In Figure 3, the receiving portion each comprise a hollow space, which all extend in parallel. Therefore, a single black arrow A schematically represents the direction of insertion of any wire segment 300 into a respective receiving portion 230 of the wire holder 200. As shown, once inserted in the wire holder 200, the wires of the wire set 300 thus extend longitudinally parallel one to the others.

For the purpose of the description which follows, there is defined a direct three-dimensional orthogonal reference system XYZ, where X- and Y-axes form a horizontal plane XY, and where the X- and Z-axis form a vertical plane XZ perpendicular to said horizontal plane XY. By way of convention, this reference system XYZ is tied to the wire holder or stripping tool 200. As shown, the wire segments extend 300 parallel longitudinally along the direction of the longitudinal X-axis, and they are transversely spaced, aligning in a row along the transverse direction of the Y-axis.

The expression "three-dimensional space" (or 3D) characterizes the space surrounding the user, as perceived by his vision, in terms of width, depth and height. In mathematics, this notion corresponds to Euclidean geometry in space, according to which space is marked by three orthogonal axes, whereas a plane is made up of only two dimensions (2D) and is marked by only two of said three orthogonal axes. The three geometric dimensions thus are:
- length along the longitudinal X-axis, oriented by way of convention from the front to the rear;
- width along the transversal Y-axis; and,
- height along the vertical Z-axis, oriented by way of convention from the bottom to the top.

In addition, and unless explicitly stated otherwise, the terms and expressions in quotation marks below (and all derived terms, as well as semantically equivalent expressions) are used in the present disclosure according to the following convention:
- "rear" and "front", "behind" and "ahead", "backside" and "frontside", "backward" and "forward", and derivatives such as "in (the) front of', an "in the rear of" as well as associated verbs and derived nouns or expressions, are used in reference to the direction of the longitudinal axis X, which shall always correspond to the direction of insertion of an electrical wire into the main body 201 through the receiving portion 230 as illustrated by the arrow A in Figure 3, and which is oriented from the front to the rear on the figures of the drawings;
- "left", "right", "side" or "lateral", are used in reference to the direction of the transversal axis Y; and,
- "bottom" and "top", "below" and "above", "under" and "over", the verbs "to decline" and "to rise" and any derivatives, synonyms or equivalents, as well as the terms "superior" and "inferior", as well as associated verbs and derived nouns or expressions, are used in reference to the direction of the vertical axis Z, which is oriented from the bottom to the top on the figures of the drawings.

By extension, and although the gripper 110 may have different orientations in the three-dimensional space depending on the sequence of use, the aforementioned linguistic conventions are also used with respect to the geometry of the gripper 110 and the dynamic operation of its component parts. In other words, the aforementioned vocabulary will also be used in what follows with respect to the clamp and any of its components and is to be understood on the assumption that the clamp 110 is positioned with respect to the dummy connector 200 so as to operatively grip the wire segments 300 as they are plugged into said dummy connector 200.

For the sake of clarity, axes X, Y and/or Z of the above reference system XYZ are represented by respective arrows on the figures of the drawings, where appropriate.

Back to **Figure 3****,** in the example shown therein the main body 201 of the wire holder 200 comprises six wire receiving portions 230 which extend longitudinally along the direction of the X-axis, and adjacent to each other in a row along the transversal direction of the Y-axis. These number and arrangement are only an example. More receiving portions, or less receiving portions, can be provided depending on the wire harness to be manufactured. Further, the receiving portions can be arranged other than in one horizontal line as shown in Figure 3. For example, several receiving portions can be arranged in a matrix of rows superimposed along the vertical direction of the Z axis, for instance with a horizontal shift with respect to the transverse direction of the Y-axis. For example, said horizontal shift can be of half the pitch of the receiving portions 230 along the Y direction of the rows.

The wire holder 200 is shown in Figure 3 with, plugged therein, a set of e.g. four electric wire segments 300 to be stripped and then to be spliced or welded by the splicing or welding machine 600 to form the intended harness element.

An electric wire segment has an electric conductor covered by an insulating sheath. The electrical conductor can be monolithic or multi-strand. The dummy connector 200 is adapted to receive and hold the wires 300, and to cut and grab an end portion of their insulation jacket. That way the wire segments are pre-stripped in a way that when the gripper 110 actuated by the robot arm 100 pulls the wires out of the wire holder 200, the terminal sheath portion is removed and the wires are fully stripped, thus ready for splicing or welding. The cutting of the wire sheath to form pre-stripped wire segments will become more apparent from the below description of Figure 4A and Figure 4B.

The wire holder 200 comprises a main body 201, for example made of plastic and formed, for example, by 3D printing. The main body 201 comprises one or more receiving portions 230 for individually receiving one or more electrical wire segments 300, cut to length and to be stripped, respectively. Stated otherwise, each receiving portion is preferably adapted to receive a respective one of the wire segments 300. The receiving portions are hollow portions which extend along the longitudinal direction of the X-axis. They each have abutments which, when wire segments are accommodated in the receiving portions, provide that the respective pre-stripped ends of the wire segments are aligned longitudinally.

For the purpose of grabbing the end portion of the insulation jacket of the pre-stripped wires, the main body 201 of the wire holder 200 further has slots 220, which are respectively associated to each one of the receiving portions 230. In embodiments as shown, any one of slots 220 is arranged under a respective one of the wire receiving portions 230.

Clamping levers such as lever 210 shown in Figure 3, can be arranged in each one of the receiving portions 230, respectively. The technical function achieved by these levers 210 is to clamp or pinch a wire after it has been introduced forcibly, that is with some force in an operative position within the corresponding receiving portion 230. To that end, each receiving portion 230 is in inner communication with its associated slot 220, so that at least the rear end of the corresponding lever 210 can contact and press the wire upwardly within said receiving portion against upper walls of the receiving portions 230. The terms "operative position" with respect to electrical wire(s) mean, in the context of the present description, a position, ready from stripping, plugged in the wire holder. In Figure 3, only the rear of the clamping levers 210 is visible and their mode of operation is not described in more detail so as not to obscure the present description by unnecessary details with regard to the wire gripping aspect which forms the basis of the embodiments of the invention.

With reference to **Figure 4A** and **Figure 4B****,** a pre-stripped wire is an electrical wire comprising a main insulated portion, a terminal insulated portion and a stripped portion situated therebetween, obtained by cutting the insulating sheath of the electrical wire into a main insulating sheath portion and a terminal sheath portion.

With reference, first, to **Figure 4A****,** the electric wires 300 each have an inner electric conductor covered by an insulating sheath. The electric wires 300 may have multiple (conductive) strands therein or a monolithic electric conductor, both generally in copper, or any other conductive material. The insultation or sheath could be in an insulative material, such as plastic or PVC ("polyvinyl chloride"). The electrical wires 300 each preferably have a main portion 301 which is insulated, a distal end portion 302 with insulation and a (pre-) stripped portion 303 between said main portion 301 and said end portion 302. The conductor at the distal end portion 302 is to be spliced or welded. The sheath surrounding the distal end 302 is circularly cut but not yet completely removed to facilitate insertion into the receiving part 230, i.e. the distal end of the wire is only partially stripped, which is why the wire is said to be 'pre-stripped'. The person skilled in the art will indeed appreciate that it is very useful to fully strip the distal end portion 302 just before using it for splicing or welding, in particular when the electrical wires 300 comprise several strands which may spread in various directions (and which may prove difficult to transport or store, for that reason).

In addition, the still sheathed end of the wires enables them to form an abutment part at the distal end of the pre-stripped wire, which abuts against the back of the wire receiving parts 230 of the wire holder 200, thus ensuring correct longitudinal alignment of said wires when they are all plugged into said wire holder. To that end, the back of the body 201 may have optional stop portions or final abutment portions associated with the receiving portions 230 to limit the insertion of the electric wire 300 as necessary.

When the gripper 110 is operated by the robot arm 100 (see Figure 1), it forcibly withdraws the electric wires 300 all together from the receiving portions 230 by pulling them backwards along the longitudinal direction of the X-axis, while the pre-stripped wires 300 keep being applied a stripping effort on the insulation of the end portion 302 by the levers 210. This will remove the insulation or sheath 305 from the end portion 302, as illustrated by **Figure 4B****,** so as to form a stripped end portion 304. As previously mentioned, this step takes place after the wire holder 200, containing the pre-stripped wires 300 hold therein, has been transported from the plugging area 810 to the welding or splicing area 610 by the operator or by a robotic arm, or by any other automated device (e.g. a device comprising a fully automatic conveyor).

The gripper enables all the wires plugged into a wire holder and extending parallel in their respective directions of longitudinal extension to be gripped at once, regardless of their number, for example irrespective of whether there is only one wire or whether there are six wires held in the wire holder or dummy connector 200, and regardless of the respective cross-sections of the wire segments 300. The movement of the robot head remains the same in all cases. Advantageously, the stripping of the wire segments caused by their removal as a group from the receiving portions 230 of the dummy connector 200 maintains both their alignment along the longitudinal direction and their relative positioning along the transverse direction unchanged.

To that end, and with reference to **Figure 5****,** the gripper 110 has a comb-like structure with a series of N+1 parallel longitudinally extending clamping walls 111, where N is the maximum number of wires which can be parallel fitted, i.e. accommodated in parallel in the wire holder 200. In the example of the wire holder 200 as shown in Figure 3, N equals six (i.e., N=6). The clamping walls 111 include, for instance, at least one fixed wall and a number N of mobile walls, said mobile walls being mobile in the transverse direction of the Y-axis (being recalled that "transverse direction" is meant relative to the longitudinal direction of extension of the wires along the X-axis). The clamping walls 111 are spaced apart transversely along the transverse direction of the Y axis. Each interval between two adjacent clamping walls 111 thus has with a variable width along the transverse direction of the Y-axis.

Each pair of adjacent clamping walls 111 forms a wire-receiving passage in which a wire segment 300 can be accommodated, as shown in Figure 5. In addition, at least some of the clamping walls are individually linearly movable along the transverse direction. Functionally, these pairs of adjacent clamping walls form releasable jaws, each adapted to releasably grip a respective wire segment 300, proximate to its pre-stripped end.

Under control by an ad-hoc control unit (which may be implemented in general unit 900 as shown in Figure 1) the wire gripper 110 is moved by the robot arm 100 towards the wire holder 200 in which are accommodated a plurality of pre-stripped wire segments 300 aligned in a row.

The control unit is programmed to cause the raking of the wire segments 300 by the comb-like clamping wall structure 111a of the gripper 110, such that each wire segment is disposed into an associated wire receiving passageway between a respective pair of spaced apart clamping walls 111, as shown in Figure 5.

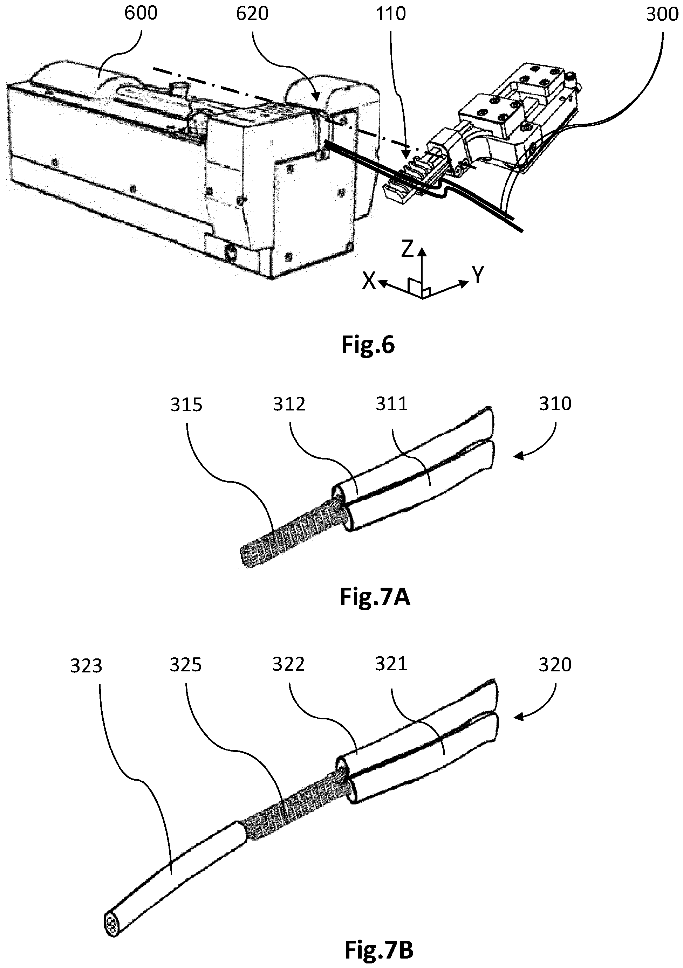

A robot arm 100 equipped with a gripper 110 as described in the foregoing can be used to strip electric wire segments by pulling them out of one stripping tool or dummy connector 200, and to bring the stripped wires thus obtained to the welding or splicing machine 600 as illustrated by **Figure 6****,** for making splices.

It will be appreciated that the splices may be butt splices 310 as shown in **Figure 7A** or dual end splices 320 as shown in **Figure 7B****.**

In the case of a butt splice 310, the stripped ends of a set of wire segments like wire segments 321 and 312 as shown in Figure 7A can be presented to the machine 600 by the gripper 110 under the control of the robotic arm 100, into the splicing or welding zone 620 of the machine 600, where splicing if performed under the control of the general unit 900 of Figure 1.

In the case of a dual end splice, the stripped ends of a first set of wire segments (for instance wires 321 and 322 as shown in Figure 7B) can be presented to the machine 600 by the gripper 110 under the control of the robotic arm 100, into the splicing or welding zone 620 of the machine 600 from one side of the longitudinal direction of the X axis (which is illustrated by the dotted line in **Figure 6**)**.** And the stripped ends of a second set of wire segments (for instance the sole wire segment 323 as shown in Figure 7B) are brought into said splicing or welding zone 620 from the other side of the longitudinal direction of the X axis, for example by the same gripper 110 during another operating cycle.

To summarize, the gripper 110 according to embodiments as described in the foregoing can be used in a number of ways to improve quality in terms of defects associated with the positioning of wires, not only during stripping when the wire segments are pulled out from the receiving portions 230 of the dummy connector 200, but also for splicing or welding, in particular during transport from the dummy connector 200 to the splicing or welding zone 620 of the splicing or welding machine 600. The stripped end portions of the wire segments 300 are introduced into the splicing or welding zone 620 longitudinally aligned and laterally ranked as they were in the dummy connector.

Stated otherwise, longitudinal alignment and lateral positioning of the different wires is preserved during the whole process, thanks to the fact that one and the same toll, namely the gripper according to embodiments, is involved. In addition, the gripper allows elimination of manpower on splicing or welding of wires segments, which reduces the risk of quality problems, since good precision in operator independent wire positioning in the welding area since (both lateral positioning and longitudinal end alignment of the different wires is achieved. Further, use of the gripper according to embodiments allows shorter cycle time.

According to the proposed solution, the support device as per embodiments is adapted to cooperate with a pallet as those used in known auto-plugging machines like machine 800 as presented in reference to Figure 1.

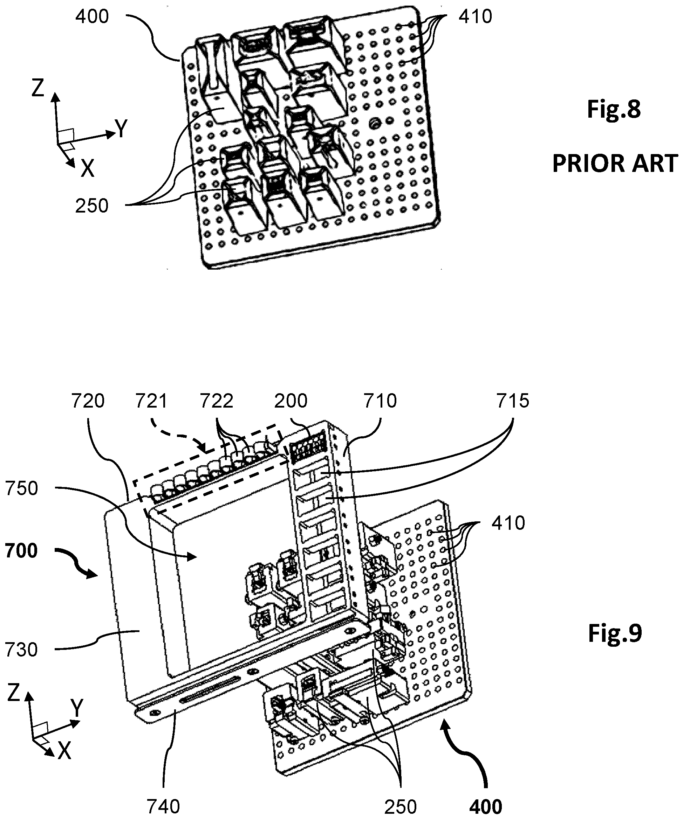

**Figure 8** shows, in an isometric perspective view, a pallet 400 with wire harness connectors 250 plugged therein. These connectors 250 are the wire connectors of at least one, and preferably one and the same piece of wire harness under fabrication. In the shown example, the pallet is substantially square-shaped, extending in the vertical plane Y,Z. For instance, the dimensions of the pallet 400 in that plane can be 20 mm x 20 mm. The back of each one of connectors 250 has pins (not to be seen in Figure 8), through which ii can be plugged into pinholes 410 of the pallet. As shown in the figure, the surface of the pallet 400 has a matrix of evenly spaced holes, with a pitch that allows all the connectors of a given piece of wiring harness to be plugged in said pallet for the performance of the manufacturing steps carried out at the auto-plugging machine 800 of Figure 1.

For example, the 250 connectors are placed manually in the pallet 400 by an operator. This may be done at level of the auto-plugging machine 800, namely within the auto-plugging area 810 as shown in Figure 1. This step may be carried out automatically, in other words by any suitable robotic tool, independently of any operator. In a context of use of the proposed support device and for the reasons which shall become apparent from the following description of embodiments thereof, the connectors 250 should preferably be concentrated in the middle of the pallet 400. Stated otherwise, the center of the surface of the pallet 400 should be kept free of connectors 250.

With reference to **Figure 9****,** the support proposed device 700 has a frame-like structure. For example, it has *e.g*. four outer frame segments 710, 720, 730 and 740 and at least one central open window (*i.e*., hollow portion) 750 formed between said frame segments. In the shown example, the frame-like structure of the support device 700 has substantially the same shape and size as the pallet 400 of Figure 8. More precisely, the support device 700 as shown has a square or rectangular shape, and comprises four outer frame segments including two lateral frame segments 710 and 730 namely left-side and right-side segments extending vertically, respectively, as well as two horizontal frame segments 720 and 740 namely upper and lower segments, respectively. The one skilled in the art will appreciate that the invention does not intend to be limited to the number of frame segments nor to the shape as shown. The support device 700 may have any other polygonal shape, for example the shape of a triangle, an hexagon or an octagon. It can also have cut or rounded angles. Furthermore, it can have a round shape, for instance it can be substantially the circular, oval or elliptical. In such embodiments, the outer frame segments of the support device can be curved, in contrast with the four outer frame segments 710, 720, 730 and 740 of the embodiments as depicted in the drawings and discussed in the present disclosure.

Furthermore, as illustrated by the exploded view in Figure 9, the support device 700 is adapted to be placed onto an underlying pallet such as the pallet 400 in Figure 8. More precisely, the support device 400 is brought as close as possible to the surface of the pallet 400, and preferably so that its frame segments 710, 720, 730 and 740 get in contact with the surface of the pallet 400. In this way the overall dimensions in the longitudinal direction of the X-axis of the assembly formed by the support device 700 stacked over the underlying pallet 400 are reduced to a minimum.

To this end, the connectors 250 fixed to the pallet 400 should be placed on the pallet so as to emerge through the open window 750 of the support device 700. Stated otherwise, the frame segments 710, 720, 730 and 740 more particularly overlap (and preferably contact with) the outer edges of the pallet 400, hence the above-mentioned advantage of placing the connectors 250 in the middle of the pallet 400, at some distance from its outer edges.

Considering the features mentioned in the foregoing, the support device 700 can be regarded as a mask, which covers and preferably contacts with the outer edges of the pallet 400 while exposing the central portion of the surface of said pallet through its open window 205, and hence allowing the connectors 250 to emerge therethrough. For that reason, the support device 700 shall also be referred to as a "mask" is what follows.

In some embodiments at least some of the outer frame segments 710, 720, 730 and 740 of the support device 700 have fixtures, i.e., fasteners, for securing said support device 700 to the underlying support pallet 400. Preferably, the fixtures are adapted to attach the mask 700 onto the pallet 400 such that the plane of said mask 700 extend parallel to the plane of said pallet 400 when secured hereto through said fixtures. The skilled person will appreciate that such fixtures are not visible in Figure 9, but some embodiments will appear in and will be described below with reference to other figures of the drawings.

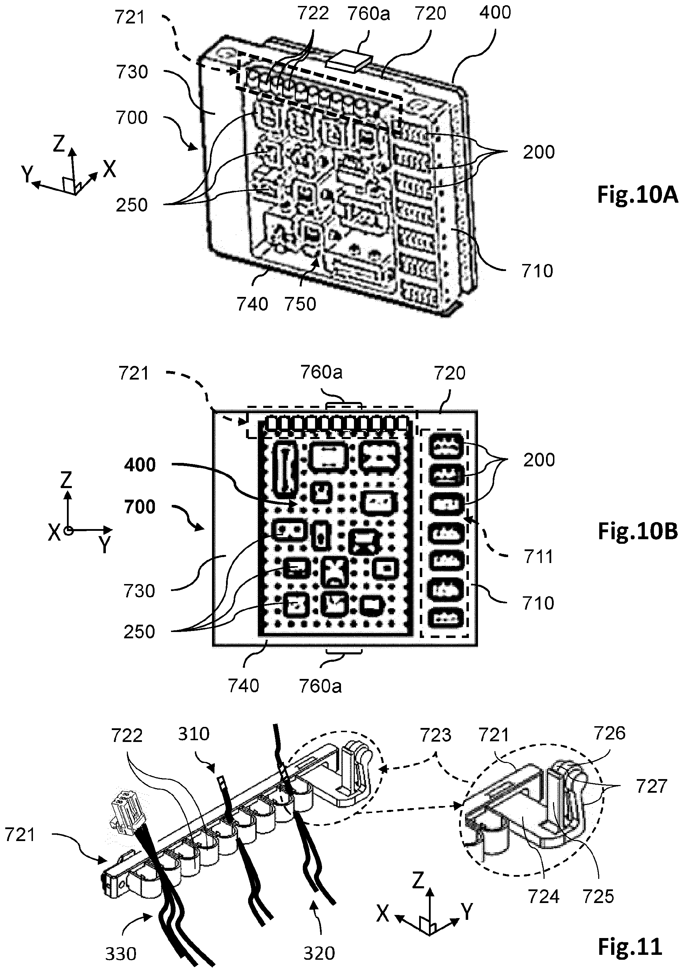

In the embodiment as shown if **Figure 10A** and **Figure 10B****,** for example, the fixtures comprise at least one and preferably two snap-fit fasteners 760a and 760b arranged on respective ones of the frame segments 710, 720, 730 and 740 of the mask 700. Said snap-fit fasteners 760a and 760b are adapted to cooperate with corresponding edges of the pallet 400, for releasable attachment of the mask 700 thereto. Advantageously, such snap-fit fasteners are adapted to cooperate with the pallet on a "as-is" basis. Stated otherwise, there is no need to modify the design of the 400 pallet.

In the example as shown One fixture 760a is located at the upper frame segment 720 of the mask 700 and is adapted to engage with the upper edge of the pallet 400, while the other fixture 760b is located at the lower frame segment 740 of the mask 700 and is adapted to engage with the lower edge of the pallet 400. Of course, snap-fit fasteners 760a and 760b can also, in a variant, be arranged at lateral frame segments 710 and 730, respectively, to engage with the lateral (i.e., vertically extending) edges of the pallet 400. In still other embodiments, one or more fixtures like snap-fit fasteners 760a and 760b can be provided on one or more of the four frame segments 710, 720, 730 and 740.

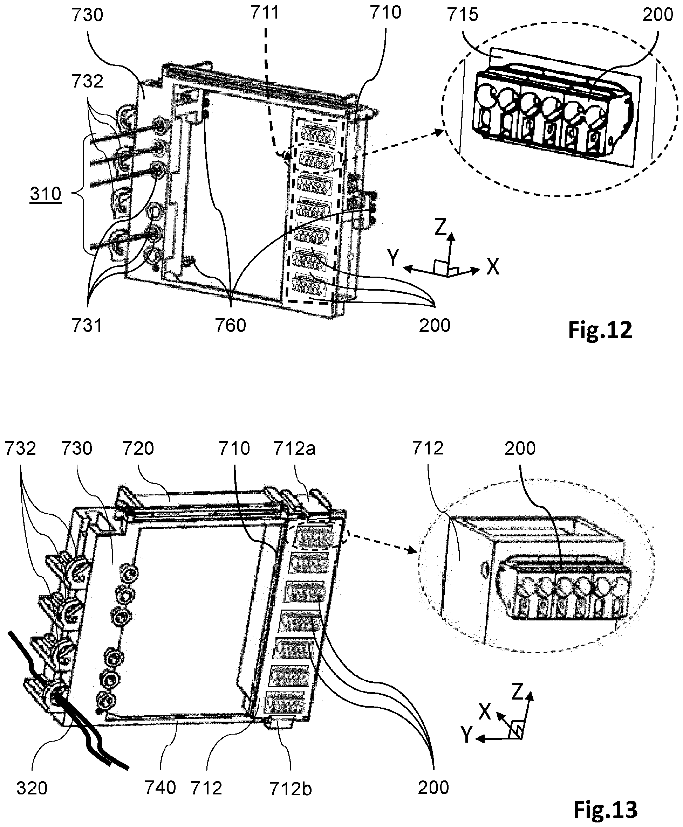

With reference to the embodiment as shown in **Figure 12****,** the fixtures comprise pins or lugs 760 adapted to clip the support device 700 in the pallet 400. These pins 760 operate in cooperation with pinholes 410 which are provided in the surface of the pallet 400, basically for releasable attachment of the wire connectors 250 to said pallet. Stated otherwise, this embodiment of the fixtures takes advantage of pinholes 410 which are already present on the surface of the pallet 400 and adapted for use in a plug-in relationship. Thus, also in this embodiment there is no need to modify the design of the pallet 400.

Referring further to **Figure 12** and again to **Figure 10A** and **Figure 10B****,** in some embodiments as shown in these figures, at least one of the outer frame segments 710, 720, 730 and 740 of the mask 700 may comprise one or more dummy connectors 200 as described in detail above with reference to Figure 3. It is recalled that what is meant by a dummy connector is a wire holder specifically designed to perform the function of stripping wires before they are spliced or welded, and hence in sometimes referred to as stripping tool in the present disclosure.

The wire segments 300 cut to length can be plugged into one or more of these dummy connectors at the wire plugging area 810, for example by the automatic plugging machine 800. When this is done, the wire segments are pre-stripped. They can then be removed from the dummy connector 200, which is preferably done at the splicing or welding area 610, to be processed by the splicing or welding machine 600. Following this removal, which is carried out by the wire gripper which automatically grasps the wire segments 300 and pulls them out of the dummy connector 200, said wire segments 300 are completely stripped. They are therefore ready to be spliced and, to this end, are presented to the splicing or welding machine 600 for this process to be carried out.

It follows that there is a need of being able to bring wires from the wire plugging area 810 to the splicing or welding area 610 without losing alignment and relative positioning of the pre-stripped wires to be processed by the splicing or welding machine. This is achieved, according to embodiments, by using the mask 700 as a carrier for transporting one or more dummy connectors with pre-stripped wires loaded therein, from the wire plugging area 810 to the splicing or welding area 610. This way, processing of wire harness elements such as splices may be further automatized. Indeed, the fabrication line is made more robotic by making the splicing or welding process automatic, i.e. operator independent, using a robotic splicing or welding workstation 1 as shown in Figure 1 which receives pre-stripped wires plugged in dummy connectors 200, said dummy connectors 200 being carried by the mask 700 during the transfer illustrated by thick with arrow in Figure 1.

In some embodiments illustrated in the drawings, for example seven dummy connectors 200 are arranged vertically one above the other along the Z-axis direction, which is the vertical direction of extension of the lateral outer frame segments 710 and 730, among the outer frame segments 710, 720, 730 and 740. In the illustrated examples, the dummy connectors 200 are received in respective connector holders 715 which, for example, are vertically aligned and evenly spaced along the right-hand lateral frame segment 710. The connector holders may be casings directly formed within the material of the mask 700. Having the dummy connectors 200 so grouped on the edge of the mask 700 is advantageous since it minimizes the displacements of the gripper 110, and thus is favourable to cycle times and power consumption by the robot arm 100.

With reference now to **Figure 10A** and **Figure 10B****,** in other embodiments the support device (or mask) 700 further comprising a rack 712 wherein the dummy connectors 200 can be arranged, and which is adapted to be removably secured to the lateral outer frame segment 710 of the mask 700.

In one example, the rack 712 may comprise at least one fastener like snap-fit fasteners 712a and 712b, adapted to cooperate with edges of the support device 700 for releasable attachment of the rack thereto. In the shown example, the fasteners 712a and 712b are arranged for cooperating with the upper outer frame segment 720 and with the lower outer frame segment 740, respectively, of the mask 700. This is only an example. In a variant or in combination, snap-in fasteners can also be adapted to operatively cooperate with edges of the the lateral outer frame segment 710 of the mask 700.

The cassette 712 may also be secured to the mask 700 by other means, such as by plugging pins or lugs provide at the rear of the cassette into holes formed in the core of the supporting outer frame segment 710, for instance.

Of course, the mask may comprise more than one rack for holding dummy connectors 200. In particular, a plurality of smaller racks can be aligned vertically, or transversally on one and the same outer frame segment of the mask. In a variant, one or more racks can be provided on the lower outer frame segment 740, or on the upper outer frame segment 720. Also, at least two racks can be provided, one on each of two opposed outer frame segments, such as lateral frame segments 710 and 730, or on each of adjacent outer frame segments, such as lateral frame segment 710 and lower outer frame segment 740 for instance.

Having a rack such as rack 712 makes the support device 700 a bit more complex, because it has one extra component, which needs to be secure to the frame of the mask. However, the advantage is that racks can be removed from the mask and can thus be returned separately to the plugging area 810 (for instance by an operator), to be re-used for the fabrication of another piece of wire harness, for example, while the mask is still used to support processed or to-be-processed wire harness elements at the splicing or welding area 810, as will now be described. State otherwise, thanks to a cassette containing several dummy connectors, it is possible to remove the cassette 712 from the mask 700 so that said mask can be used as a tool for transportation of wires and said cassette can be moved back to the plugging area 810 for being used there in another cycle.

Another advantageous feature of the proposed support device 700 is that it offers the possibility of having finished splices separately positioned and securely hold in stable position after their making by the splicing or welding machine 600 at the splicing or welding workstation, instead of being erratically dropped into a collecting container provided on the ground, for instance, and/or instead of having some wire harness elements (in particular the splices 310 and/or 320) hanging in the air erratically while other wire harness elements (such as the connectors 250 with wire plugged therein) are still hold by the pallet 400, for instance.

This advantage can be achieved, according to further embodiments, by the support device 700 having bearing elements arranged on at least one of the outer frame segments 710, 720, 730 and 740. Such bearing elements 721, 731 or 732 as shown in the figures are adapted to bear sets of wires sets of wires of wire harness elements such as butt splices 310 and dual-end splices 320 after they have been processed in the splicing or welding area 610.

In some embodiments as illustrated in **Figure 9****,** **Figure 10A** and **Figure 10B****,** the bearing elements comprise at least one wire hanger bar 721 arranged on one of the outer frame segments 710, 720, 730 and 740. As shown in these figures and further in Figure 11, the wire hanger bar 721 may comprise an arrangement of M-shaped pairs of clamping buckles or loops 722 for supporting wire sets like butt splices 310 and/or dual-end splices 320 after they have been processed in the plugging area 810 and/or in the splicing or welding area 610. Moreover, other wire harness elements 330 such as crimped connectors with wires plugged therein can also be hung at the hanger bar 721. For instance, wire harness elements 310, 320 and/or 330 can be hung manually by an operator.

A person skilled in the art will appreciate, with reference to the more detailed view of the hanger bar 721 in **Figure 11****,** that clamping buckles 722 realized in a flexible material such as a sheet of plastic and tightly arranged side-by-side in a row, allow one or more wires of the wire harness element to be clamped when inserted between two adjacent ones of these buckles. The sklieed person will appreciate that splices or other wires of any wire harness element so clamped in the hanger bar 721 extend substantially parallel to the vertical plane Y,Z of the mask 700 when the bar 721 is fixed thereto.

Preferably, the wire hanger bar 721 may be arranged on the upper outer frame segment 720 amongst the outer frame segments 710, 720, 730 and 740. This way, the hanging wires are less subject to reach the floor when clamped in the bar. In this embodiment, the clamping buckles 722 are arranged horizontally side by side along the horizontal direction of the Y-axis, which is the direction of extension of the upper outer frame segment 720. It goes without saying that, in a variant, M-shaped buckles can be aligned vertically side by side along the vertical direction of the Z-axis, which is the direction of extension of the lateral outer frame segments 710 and 723. This way, the hanger bar may be arranged on e.g. the left-hand outer frame segment 730 of the mask 700.

In some embodiments, the wire hanger bar 721 as a whole, or the clamping buckles 722 individually, may be removably mounted onto the upper outer frame segment 720. This means that the hanger bar 721 can be used as separate carrier for, e.g. taking the wire harness elements clamped therein to another processing area in the wire harness assembly line, while the mask 700 and/or the underlying pallet 400 remain in the splicing or welding area 610 for completing the processing there of further wire harness elements supported by the mask and/or the pallet, or are returned to the plugging area 810 for running another operational cycle with said mask. This is inasmuch advantageous as the cost for manufacturing a hanger bar is very low compared to the cost of production of a support device 700. Stated otherwise, it is possible to have many hanger bars 721 used in combination with one and the same support device 700, thus improving the overall cycle time (CT).

Indeed, a separate wire hanging bar which can be removably, i.e., detachably placed and secured on the mask can serve as transportation device, independently of the mask itself. For instance, a plurality of wire harness elements, once processed at the splicing and welding area 610 or which do not need to be processed there, can be displaced (either manually by an operator, but why not automatically by a robot) in a series of wire hanging bar placed in sequence onto the mask 700 which remains present and potentially in use at said area 610. Once fully loaded by such wire harness elements, a wire hanging bar can be detached from the mask and brought by the operator to the next workstation, if any. In contrast, the outstanding fabrication cycle, which involves the mask, keeps ongoing at the automatic splicing or welding area.

Because a wire hanging bar is cheap and simple, in particular when is is made by plastic injection moulding, many of them can be used at the splicing or welding area 610. In contrast, the mask can be manufactured as a computer numerically controlled (CNC) machined metal part, which is relatively expensive in terms of the manufacturing process and the material used. Consequently, it is preferable to use only one mask for a given cycle in the automatic splicing or welding area 610.

With reference to **Figure 11****,** the bearing elements of the support device 700 may further comprise one or more clamps (or clipper) such as clamp 723 as illustrated. In the embodiment shown in Figure 11, the clamp 723 extends from the wire hanging bar 721. This is advantageous because the clamp 723 can thus be formed integrally with the bar 723, during the same injection moulding process. This solution is inexpensive.

As shown in the detail of Figure 11, the clipper 723 comprises an arm 724 which extends longitudinally in the X-axis direction rearwardly from the vertical Y,Z plane of the support device 700 when the bar 721 is secured thereto. The arm 724 may be a few centimetres long, for example. The clipper 723 further comprises a column 724 which extends vertically along the Z-axis direction, e.g. also a few centimetres in length upwards from the distal end of the arm 724. This column preferably has a rectangular cross-section in the horizontal plane X,Y, thus having two relatively smaller and two relatively larger opposite vertical faces. In addition, the clamp 723 comprises at least one resilient lever 727, and preferably two similar parallel resilient levers 727, which also extend vertically from the distal end of the arm 724 adjacent to and substantially parallel to the column 725. The free upper end of this single lever 727 or the respective free upper ends of these two levers 727 carry a roller 726, such as a drum as illustrated, or a ball. The elastic force exerted by the resilient lever(s) 727 forces the roller 726 into rolling contact with the free upper end of the column, preferably against an opposite one of the larger vertical planes.

In use, a wire harness element such as one of the splices 310 and 320 and the crimped connector 330, be clamped between the column 725 and the lever(s) 727. To this end, the wires can be bent to form a loop, by which the wire harness element is inserted in the clamp 723 The roller 726 facilitates the insertion of the wire harness elements into the clamp 723, in combination with the resilience of the lever(s) 727 causing said lever(s) to move slightly away from the free upper end of said column 725 as the element is inserted into the clamp 723, from top to bottom. Similarly, it facilitates removal of the wire harness element from the clamp, when said element is extracted from the bottom upwards. These operations can be carried out manually by an operator or automatically by a robot. This can takes place at the plugging area 810 and/or at the splicing or welding area 610.

When clamped in the clipper 723, the wire harness element and in particular the portion thereof which is locally in of the clipper may extend substantially parallel or perpendicular to the vertical plane Y,Z of the support device 700 when the wire hanging bar 721 is secured thereto, depending of the relative positions of the column 725 on one hand, and of the lever(s) 727 on the other hand. The skilled person shall appreciate that this direction of extension is perpendicular to te direction of the elastic force exerted by the lever(s) 727 agains the opposite plane of the column 725.

In all configurations disclosed above, the roller 726 ensures that the wire harness element inserted into the clamp 723 is firmly held there and cannot come out.

In the shown embodiment, the clipper 723 extends indirectly from the support device 700 when the wire hanger bar 721 is secured thereto. In a variant or in combination, however, the clipper 723 and/or any similar clipper can extend directly from the support device 700. In such embodiments, the clipper(s) may be separate component(s) made in one or more worked pieces of metal or formed integrally by plastic injection moulding.With reference now to **Figure 12** and **Figure 13****,** at least one of the external frame segments 710, 720, 730 and 740 comprises one or more funnels (or hopper) 731 that form holding cavities adapted for bearing respective sets of wires of wire harness elements 310 or 320. The funnels 731 may be conical in shape. They can be formed in metal, in plastic material e.g. by plastic injection moulding, or in a rubber material, for instance. This embodiment is suitable, in particular, for supporting butt splices 310 as shown in **Figure 12****,** after they have been processed in the splicing or welding area 610. Indeed, butt splices have a welded end portion 315 as shown in Figure 7A, which facilitates insertion of the splice 310 into the holding cavity of the funnels 371.

The one skilled in the art will appreciate that, when plugged into the receiving cavity of a funnel 731, a splice extends longitudinally along the direction of the X-axis, perpendicular to the plane of the mask 700 and the pallet 400. In the shown example, a plurality of funnels 731 are arranged vertically, one over the other, extending from the front of the left-hand lateral outer frame segment 730 of the mask 700. This positioning of the bearing elements is advantageous for supporting relatively shorter splices since, because short splices are unlikely to bend towards the floor, they can represent an obstacle to the movement of the robot arm 100 and the wire gripper 110 in the splicing or welding area 610. Being so located as distant as possible from the set of dummy connectors 200 arranged on the opposed right-hand lateral outer frame segment 710 of the mask 700, any (possibly) short butt splices hold in the funnels 731 are less at risk of interfering with the robot arm or the wire gripper 110.

With further reference to **Figure 12** and **Figure 13****,** at least one of the external frame segments 710, 720, 730 and 740 comprises an arrangement of G-shaped hooks 732 adapted for bearing, each, one or more sets of wires of respective wire harness elements 310 or 320 of the harness under fabrication, and in particular dual-end splices 320 as shown in **Figure 13****,** after they have been processed in the splicing or welding area 610. In the shown example, a plurality of hooks 732 are arranged vertically, one over the other, extending outwards from the left-hand lateral outer frame segment 730 of the mask 700. The G-shaped hooks 732 are particularly suitable for bearing dual-end splices 320 after they have been made, as they can be suspended with the somehow central welded portion 325 as shown in Figure 7B housed in the G-shaped hook, their weight being roughly balanced on the hook. This embodiment of the bearing elements is also advantageous for supporting relatively longer splices, since approximately half their length in addition to approximately half their weight, extend on either side (along the longitudinal direction of the X-axis) of the plane of the mask and the pallet. This reduces the risk that such long splices reach the floor when supported by the bearing elements 732 of the mask 700. In this embodiment too, when housed into the G-shape hook 731, a splice 310 o 320 extends longitudinally along the direction of the X-axis, perpendicular to the plane of the mask 700 and the pallet 400.

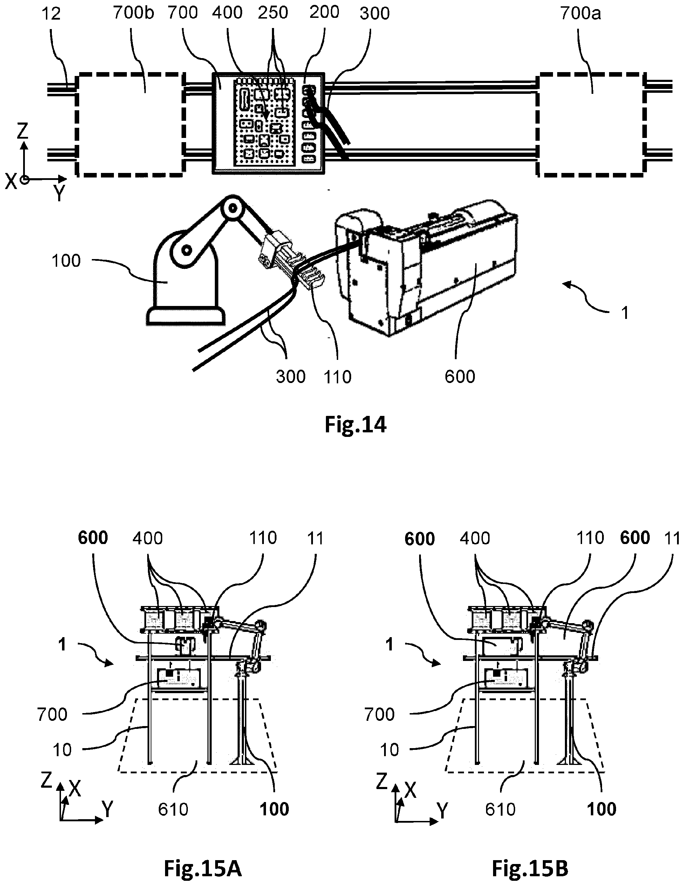

**Figure 14** schematically shows the splicing or welding workstation 1 of Figure 1. There is shown therein the robot arm 100 and its gripper 110 in the process of presenting wires 300 to the splicing or welding machine 600. As shown, the machine 600 and hence the robot arm 100 are placed in close vicinity with the pallet 400 which holds the crimped connectors 250 disposed in the center of the pallet 400, and which is covered (along the longitudinal direction) by the mask 700 whose central open window exposes the connectors 250 hold the covered pallet 400 as shown. For the sake of not surcharging the figure, only some of the wires 300 which have been plugged in the upstream auto-plugging machine 800 are shown in Figure 14. Namely, only wires plugged into dummy connectors 200 supported by the mask 700 are shown.

Figure 14 illustrates that, in addition to the assembly comprising the mask 400 placed over the pallet 400 (along the longitudinal direction) which is used to support the wire segments to be used in, and the wire harness element once processed by the workstation 1, there can be one additional similar assembly 700a ready for processing and waiting for being processed, and one more additional assembly 700b the process of which is completed and which is waiting for being displaced away from the workstation 1, for instance for being returned to the auto-plugging area 810 for another auto-plugging cycle to be carried out there. In some embodiments, there can be two further masks concurrently present in the auto-plugging machine 800 at the auto-plugging area 810, for instance one in preparation and one in processing by said machine 800. In total, the assembly line can thus be using five masks 700, and as many pallets 400 in the same time.

The buffering kits, which consist each of an assembly of one mask according to embodiments as disclosed in the foregoing which is operatively arranged onto (along the longitudinal direction of the X-axis) one pallet, allow minimizing the overall cycle time of the assembly line. In particular, the auto-plugging machine 800 waiting time is never affected by unavailability of masks to be loaded on it.

As shown in the figure, the pallets can be transported automatically from the the auto-plugging area 810 to the splicing or welding area 610, by an ad-hoc conveyor 12. The buffering kits as well as the assembly comprised of the pallet 400 and its associated mask 700 in process, can all be serially moved along that conveyor.

Of course, depending on the specificities of each application, more buffering kits can be used, in particular in the workstation 1 where the splicing or welding process is carried out. For instance, provision can be made for two buffer masks upstream of the splicing or welding machine 600, and two other downstream of said machine 600.

The position of the splicing or welding machine 600 relative to the pallet 400 and the disc 700 under processing at the splicing or welding area 610 which is shown in Figure 1 has proved to be the best position. This best position is upper right side of the mask 700 under processing. In that position, besides, the machine 600 is aligned along the longitudinal direction of the X-axis. This allows movements of the the robot to be as short as possible (reducing traveling distance of the wire gripper 110) and consequently the wires length can be shorter because the distance from mask to the USW module of the splicing or welding machine 600 is short.

In addition, the splicing or welding machine 600 can preferably be mounted with capacity of movement frontward and backward, along the longitudinal direction of the X-axis, so that masks can move from right to left along the conveyor and also to make butt splices. Indeed, for the making of butt splices 310 (see Figure 7A), namely splices with wires on one side only, these wires are presented by the gripper 110 of the robot arm 100 from the front of the USW module of splicing machine 600 only. However, for the making of dual end splices such as dual end 320 shown in Figure 7B, wires 321 and 322 are to be presented from one side (for instance the front side) of the USW module, and wire 323 must be presented from the other side (namely the back side in this example) of said module.

With reference to **Figure 15A** and **Figure 15B****,** other positions and/or other orientation of the splicing or welding machine 600 different from the one shown in Figure 1, are possible though they have proved less effective or less functional:
As shown in **Figure 15A****,** the splicing or welding machine 600 can be placed under the masks when present in the workstation 1 , on a support 11 which is part of the chassis of the workstation, and ongitudinally extending along the longitudinal direction of the X-axis.

As shown in **Figure 15B****,** the splicing or welding machine 600 can alternately be placed under the masks when present in the workstation 1, on the support 11 as in Figure 15A, but here longitudinally extending along the transversal direction of the Y-axis. This orientation is particularly uneasy for the making of dual end splices 320 as shown in Figure 7B.

While there has been illustrated and described what are presently considered to be the preferred embodiments of the present invention, it will be understood by those skilled in the art that various other modifications may be made, and equivalents may be substituted, without departing from the true scope of the claims. Additionally, many modifications may be made to adapt a particular situation to the teachings of the present disclosure without departing from the central inventive concept described herein. Furthermore, an embodiment of the present invention may not include all of the features described above. Therefore, it is intended that the proposed solution be not limited to the particular embodiments disclosed, but includes all embodiments falling within the scope of the appended claims.

A person skilled in the art will readily appreciate that various parameters disclosed in the description may be modified and that various embodiments disclosed and/or claimed may be combined without departing from the scope of the solution as claimed.

For example, and whilst protection is sought, *inter alia,* for a support device according to the embodiments described as such, it will be appreciated that the present disclosure encompasses an assembly comprising the support device and a pallet such as the pallet 400 described herein, with which the support device is adapted to co-operate. This pallet may form part of a commercially available plugging machine. Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

Finally, it is stipulated that the reference signs in the claims do not limit the scope of the claims but are merely inserted to enhance the legibility of said claims.

## Claims

1. A support device (700) for supporting at least one set of wire harness elements (300,310,320) during the manufacture a given wire harness, in particular for the transport of said set from a wire segment plugging area (810) where the plugging of wire segments (300) can be performed into wire holders (250,200) which include wire connectors (250) of the wire harness being manufactured, to a splicing or welding area (610) where wire segments (300) can be presented to a splicing or welding machine (600) for processing,
wherein:
- the support device (700) has a frame-like structure with outer frame segments (710,720,730,740) and at least one central open window (750) formed therebetween,
- at least some of the outer frame segments (710,720,730,740) of the support device have fixtures (760) for securing the support device (700) to an underlying support pallet (400) adapted to support connectors (250) into which wire segments (300) can be plugged at the wire plugging area (810), the plane of the support device (700) extending parallel to the plane of the pallet (400) and the connectors (250) having the possibility of emerging through the open window (750) of the support device (700) when the support device (700) is secured to said support pallet (400) through said fixings (760),
- at least one of the outer frame segments (710,720,730,740) of the support device comprises bearing elements (721,723,731,732) for bearing at least one set of wires (310,320) after it has been processed in the splicing or welding area (610).

2. The support device of claim 1, wherein the fixtures (760) comprise snap-fit fasteners (760a,760b) adapted to cooperate with edges of the pallet (400) for releasable attachment of the support device (700) thereto.

3. The support device of any of claims 1 and 2, wherein the fixtures (760) comprise pins adapted to clip the support device (700) in the pallet (400), in cooperation with pinholes (410) which are provided in the surface of the pallet (400) for releasable attachment of the wire connectors (250) to said pallet.

4. The support device of any one of claims 1 through 3, wherein at least one of the outer frame segments (710,720,730,740) comprises one or more dummy connectors (200) into which wire segments (300) can be plugged at the wire plugging area (810) and out of which said wire segments can be removed to be processed at the splicing or welding area (610).

5. The support device of claim 4, wherein the dummy connectors (200) are arranged vertically one over the other along the vertical direction of extension of a lateral outer frame segment (710) amongst the outer frame segments (710,720,730,740).

6. The support device of any one of claims 4 and 5, further comprising a rack (712) in which the dummy connectors (200) can be arranged, and which is adapted to be removably secured to the lateral outer frame segment (710).

7. The support device of claim 6, wherein the rack (712) comprises one or more snap-fit fasteners (712a,712b) adapted to cooperate with edges of the support device (700) for releasable attachment of the rack thereto.

8. The support device of any one of claims 1 through 7, wherein the bearing elements (721,723,731,732) comprise at least one wire hanger bar (721) arranged on one of the outer frame segments (710,720,730,740), said wire hanger bar having an arrangement of M-shaped clamping buckles (722) for bearing sets of wires (310) after they have been processed in the plugging area (810) and/or in the splicing or welding area (610).

9. The support device of claim 8, wherein the wire hanger bar (721) is arranged on an upper outer frame segment (720) amongst the outer frame segments (710,720,730,740), the clamping buckles (722) being arranged horizontally side by side along the horizontal direction of extension of said upper outer frame segment.

10. The support device of any one of claims 8 and 9, wherein the wire hanger bar (721) as a whole, or the clamping buckles (722) individually, are removably mounted onto the upper outer frame segment (720).

11. The support device of any one of claims 8 to 10, wherein the bearing elements (721,723,731,732) comprise at least one clipper (723) having:
- an arm (724) which extends longitudinally in the rearwardly from the vertical plane (Y,Z) of the support device (700) when the bar (721) is attached thereto;
- a column (725) which extends vertically upwards from the distal end of the arm (724); and,
- at least one resilient lever and preferably two similar parallel extending levers (727), which also extend vertically from the distal end of the arm (724) adjacent to and substantially parallel to the column (725); and,
- a roller (726) carried by the free upper end of the lever or the respective free upper ends of the levers (727), the elastic force exerted by the resilient lever or the respective resilient levers (727) forcing the roller (726) into rolling contact with the free upper end of the column (725),

12. such that a wire harness element (310,320,330) can be clamped between the column (725) and the lever(s), the roller (726) easing the insertion of the wire harness elements into the clamp (723) in combination with the resilience of the lever(s) which causes said lever(s) to move slightly away from the free upper end of said column (725) as said wire harness element is inserted into the clamp (723) from top to bottom.The support device of any one of claims 1 to 11, wherein at least one of the external frame segments (710,720,730,740) comprises an arrangement of one or more funnels (731) that forms holding cavities adapted for bearing respective sets of wires of wire harness elements (310) after they have been processed in the splicing or welding area (610).

13. The support device of any one of claims 1 to 10, wherein at least one of the external frame segments comprises an arrangement of one or more G-shaped hooks (732) adapted for bearing sets of wires (310,320) after they have been processed in the splicing or welding area (610).

14. An automatic splicing or welding installation (1) comprising:
- an automatic splicing or welding machine (600),
- at least one support device (700) according to any one of claims 1 to 13 for supporting an assembly of wire harness elements (300,310,320) during the manufacture thereof, in particular for transport of said assembly from a wire segment plugging machine (800) adapted to carry out the plugging of wire segments (300) into wire holders (250,200) which include wire connectors (250) of the wire harness being manufactured, to a splicing or welding area (610) where wire segments (300) can be presented to the splicing or welding machine (600),
- at least one wire holder (200) adapted to hold, in a pre-stripped state, a set of wire segments (300) plugged thereto,
- a robotic arm (100) equipped with a robotic gripper (110) for gripping pre-stripped wire segments in the wire holder (200), stripping the wire segments by forcibly withdrawing them from said wire holder, and presenting the stripped wire segments to the splicing or welding machine for splicing or welding them, preferably while preserving the longitudinal alignment and the parallel extension of said wire segments (300).

15. Method of transporting wire harness elements along an industrial assembly line, from a wire segment plugging area (810) where the plugging of wire segments (300) can be performed into wire holders (250,200) which include wire connectors (250) of the wire harness being manufactured, to a splicing or welding area (610) where wire segments (300) can be presented to a splicing or welding machine (600) for processing, said method comprising using a support device as claimed in any one of claims 1 to 13 as carrier for the wire harness elements.
